(19)

**Europäisches Patentamt**
**European Patent Office**
**Office européen des brevets**

(11)  **EP 2 763 349 A1**

(12)  # EUROPEAN PATENT APPLICATION

(43) Date of publication:
06.08.2014  Bulletin 2014/32

(51) Int Cl.:
*H04L 12/24* (2006.01)

(21) Application number: **13154069.2**

(22) Date of filing: **05.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Telefonaktiebolaget L M Ericsson AB
(Publ)
164 83 Stockholm (SE)**

(72) Inventors:
• **Kovacs, László
2462 Martonvásár (HU)**

• **Magyar, Gábor
2330 Dunaharaszti (HU)**
• **Veres, András
1113 Budapest (HU)**

(74) Representative: **Lind, Robert
Marks & Clerk LLP
Fletcher House
Heatley Road
The Oxford Science Park
Oxford OX4 4GE (GB)**

(54)  **Methods and Apparatus for Determining Improved Mobile Network Key Performance Indicators**

(57)  A method of determining one or more Key Performance Indicators, KPIs, indicative of the performance of a communications network and calculated as an aggregation of performance measurement values in the communications network. The method comprises receiving a set of performance measurement samples each of which comprises a performance measurement value and an identity of an associated source, and performing a statistical analysis of the set of performance measurement samples in order to identify any source that contributes performance measurement samples that would result in a distorting effect on a KPI. This allows performance measurement samples associated with the identified sources to be separated from other samples to obtain an undistorted performance measurement sample set. The undistorted performance measurement sample set is used as a basis for calculating the or each KPI.

Figure 1

**Description**

<u>Technical Field</u>

The present invention relates to methods and apparatus for determining improved mobile network Key Performance Indicators, KPIs.

<u>Background</u>

Modern communication network systems, and in particular Public Land Mobile Network (PLMN) systems are extremely complex involving large numbers of network nodes, communication links, and communication protocols. Conversely, network subscribers and other users demand exceptionally high levels of service. For example, if a network operator cannot connect a very high number of call attempts at the first try, e.g. in excess of 99%, subscribers are likely to be dissatisfied and may consider switching to an alternative provider. It is critical for an operator to both detect any deterioration of service levels and identify the cause(s). Regularly generated Network Key Performance Indicators (KPIs) play an important role in achieving consistently high levels of network performance. A certain KPI is calculated based on a set of individual samples recorded ("observed") related to the definition of the particular KPI within a recording period (ROP).

Network KPIs may suffer from the effects of a relatively small number of distorting samples that are taken into account in the KPI calculations. This can in turn result in a network performance problem being identified while the real network situation is not at all severe. Consider for example the case where some wrongly configured user equipment (UE), e.g. a mobile phone, repeatedly transmits a faulty request to the network and thus contributes a very large set of bad samples to a network KPI calculation, while other network subscribers contribute very few bad samples. The distorted KPI value can mislead the network management process to conclude that a network fault exists when in fact no fault is present (other than at the faulty UE). Conversely, distortions can result in an improved KPI, masking a true network problem (although this scenario is less likely in practice).

*Example 1*

To illustrate the problem further, consider a "PS attach success rate" KPI that is used to measure how well WCDMA subscribers can connect to a data network when they switch on their UEs. The individual samples used to calculate this KPI come from the underlying attach procedure, generated in the Serving GPRS Support Node (SGSN), and a sample in this case can indicate a "successful" or "unsuccessful" attach. The KPI is defined for a recording period, e.g. one hour, and the final value of the KPI is the ratio of successful attach samples as a fraction of all attach samples in that period. A value close to 100% is considered satisfactory: a value significantly below 100% is considered problematic. A problem may arise due to a large number of subscribers simultaneously turning on their UEs, e.g. at the end of a concert or following disembarkation from an aeroplane or ferry, leading to temporary network congestion and causing the KPI to drop below a level considered acceptable.

*Example 2*

To further illustrate this problem, consider the case where the "3G PDP (Packet Data Protocol) context activation success rate" KPI for a network is observed to be 85% for a particular one hour long recording period: 100000 samples are obtained during the ROP, of which 85000 are successful and 15000 are unsuccessful, giving the 85% figure. The data indicates that the 100000 samples originate from 33000 different subscribers (represented by respecting International Mobile Subscriber Identities or IMSIs): so one IMSI is generating approximately three samples on average over the ROP. However, a more detailed study of the figures reveals that there is one "rogue" IMSI that has produced 7200 bad samples alone, i.e. 48% of the total bad samples, without contributing any good samples. In fact, this IMSI has been sending requests to the network repeatedly, on average every 30 seconds, due to bad terminal settings, namely a bad Access Point Name (APN) for that IMSI in the phone configuration.

Many of today's telecommunication networks, and in particular PLMNs, are run by a third party and not by the network operator itself (where it is the network operator that has the relationship with the subscribers). In the case of such a managed network, the third party may be paid based upon network performance, as measured by available KPIs. In addition to flagging up network problems that do not exist in reality, incorrect KPIs may also have a significant financial implications for both network managing and network operating entities.

Summary

According to a first aspect of the present invention there is provided a method of determining one or more Key Performance Indicators, KPIs, indicative of the performance of a communications network and calculated as an aggregation of performance measurement values in the communications network. The method comprises receiving a set of performance measurement samples each of which comprises a performance measurement value and an identity of an associated source, and performing a statistical analysis of the set of performance measurement samples in order to identify any source that contributes performance measurement samples that would result in a distorting effect on a KPI. This allows performance measurement samples associated with the identified sources to be separated from other samples to obtain an undistorted performance measurement sample set. The undistorted performance measurement sample set is used as a basis for calculating the or each KPI.

This approach allows an improved KPI or improved KPIs to be generated for a given network. It makes it possible to detect cases where an otherwise highlighted failure is in reality caused by some process that should be ignored at least from a general network perspective. The may reduce the network management burden otherwise resulting from misleading KPIs. Additionally, the identified distorting sources may allow focussed action to be taken in respect of those sources, e.g. applying a Root Cause Analysis (RCA) approach.

Each source may be a network subscriber and, for example, said source identity may be an International Mobile Subscriber Identity (IMSI). Alternatively, each said source is a subscriber type or subscriber terminal type. Other source types may also be relevant.

The step of performing a statistical analysis of the performance measurement sample set may comprise, for each source, determining a KPI value with performance measurement samples associated with the source, KPI_orig, and a KPI value without performance measurement samples associated with the source, KPI_without, and determining a score for the source based upon the difference between these KPI values. It may further comprise determining said score by calculating a ratio of said difference to a function of KPI_orig. More particularly, the score may be determined as follows:

$$\text{score} = (\text{KPI\_without} - \text{KPI\_orig}) / (1 - \text{KPI\_orig})$$

when the source has a negative impact on the KPI, and according to:

$$\text{score} = (\text{KPI\_orig} - \text{KPI\_without}) / \text{KPI\_orig}$$

when the source has a positive impact on the KPI.

The step of performing a statistical analysis may comprise comparing the determined score to a threshold score and, in the case that the determined score exceeds the threshold score, taking that as an indication that the source has a distorting effect on the KPI. The step of performing a statistical analysis may comprise comparing KPI_orig with KPI_without and, if the difference is exceeds some threshold, taking that as an indication that the source has a distorting effect on the KPI. The source may be identified as being a distorting source only if both indications are given for the source.

The method is applicable, for example, to the case where the performance measurement value can have one of two states, success or failure.

In a particular, exemplary embodiment, the communications network is a Public Land Mobile Network, PLMN.

According to a second aspect of the present invention there is provided apparatus for use in a communications network to determine one or more Key Performance Indicators, KPIs, indicative of the performance of a communications network and calculated as an aggregation of performance measurement values in the communications network. The apparatus comprises a receiver for receiving a set of performance measurement samples each of which comprises a performance measurement value and an identity of an associated source, and an analyser for performing a statistical analysis of the set of performance measurement samples in order to identify any source that contributes performance measurement samples that would result in a distorting effect on a KPI. The apparatus further comprises a sample separator for separating performance measurement samples associated with the identified sources from other samples to obtain an undistorted performance measurement sample set, and a KPI generator for using the undistorted performance measurement sample set as a basis for calculating the or each KPI.

Brief Description of the Drawings

Figure 1 illustrates an improved process for calculating KPIs in a communications network;
Figure 2 illustrates schematically a telecommunication network (PLMN) incorporating an improved KPI analysis system;
Figure 3 is a detailed flow diagram further illustrating the process of Figure 1;
Figure 4 is a flow diagram illustrating the process of Figure 1 at a high level; and
Figure 5 illustrates schematically apparatus for implementing an improved KPI calculation process.

Detailed Description

As has been discussed above, Key Performance Indicators (KPIs) provide an important tool for use in managing communication networks. In the case of a Public Land Mobile Network (PLMN), KPIs can be categorized, by way of example, into three main categories, namely:

- Accessibility - e.g. is a service or node or the network as a whole available, can the user connect to a network, etc;
- Retainability - e.g. once the user is connected, is the connection stable;
- Integrity - e.g. the quality of the used service.

Considering each of these three categories in turn, various KPIs may be defined as follows:

Accessibility KPI examples (where it can be measured 3G / 4G)

- Call setup success rate (RBS or RNC / MME)
- Packet Switched (PS) attach success rate (SGSN or GGSN / MME)
- PDP context activation success rate (SGSN or GGSN / MME)
- Paging success rate (SGSN or GGSN / MME)
- 4G establishment success rate (eNodeB)

Retainability KPI examples

- speech drop rate (RBS or RNC)
- call minutes between drop (RBS or RNC)
- minutes between HSDPA abnormal releases
- 3G PS drop (RBS or RNC)
- Routing area update success (SGSN / MME)
- minutes between E-RAB abnormal releases - 4G PS drop (ENodeB and MME)
- handover success rate (Radio network nodes RBS, RNC) Integrity KPI examples
- 4G packet loss for PS service (eNodeB)
- HSDPA throughput (this is a relatively complex KPI, requiring information from multiple nodes participating in the service)

Of course, many more KPIs can, and indeed are, defined and used. It should be further noted that KPIs are generally not standardised and will vary between network operators and equipment providers.
KPIs typically measure success of certain user procedures over some predefined time period. They are generally indicative of overall network activity and therefore represent a coarse measure, despite the fact that more detailed information, down to a per subscriber level, is often available and logged by the network. In some cases sample data used to generate a particular KPI may be obtained from a single network node, or a set of similar network nodes. In other cases, sample data collected from a single network node or set of similar network nodes, may be enriched with data obtained from one or more other network nodes. For example, whilst sample data relating to the PDP context activation success rate KPI is primarily obtained at the SGSN (using for example Event Based Monitoring, EBM), a given PDP activation procedure sample may be correlated with radio related information (e.g. collected at a Radio Network Controller, Radio Base Station, or eNodeB and identified by correlating in order to identify the circumstances of the particular PDP activation procedure. This additional information might, for example, relate to the radio conditions at the time of a particular PDP context activation attempt, identified by correlating, for example, time, cell id, user identity, etc.
More particularly, it is proposed to perform a distortion analysis on the samples serving as inputs for a certain KPI calculation. During the KPI distortion analysis, identified distorting samples are identified and separated from the remaining (non-distorting) samples. After the separation, a reliable non-distorted KPI value is calculated based on the non-distorting samples. This KPI value will likely provide a more reliable descriptor of true network performance. Furthermore, the distorting samples may be separately analysed for further actions like root cause analysis and/or immediate customer care actions.

Considering the scenario considered in the above background section and referred to as "*Example 2*", the samples belonging to the rogue IMSI are separated from the set of the samples and are labelled as distorting samples. The 3G PDP context activation success rate KPI is recalculated based upon these remaining samples, giving a non-distorted KPI value is now (85.000-0)/(100.000-7.200)=91.59%. The non-distorted KPI value serves as a more reliable measure of network performance and can provide an improved input for further root cause analysis processes. In addition, analysis of the distorted samples alerts the network operator to the presence of the rogue IMSI. The operator's customer care department may then contact the relevant subscriber to attempt to rectify the fault.

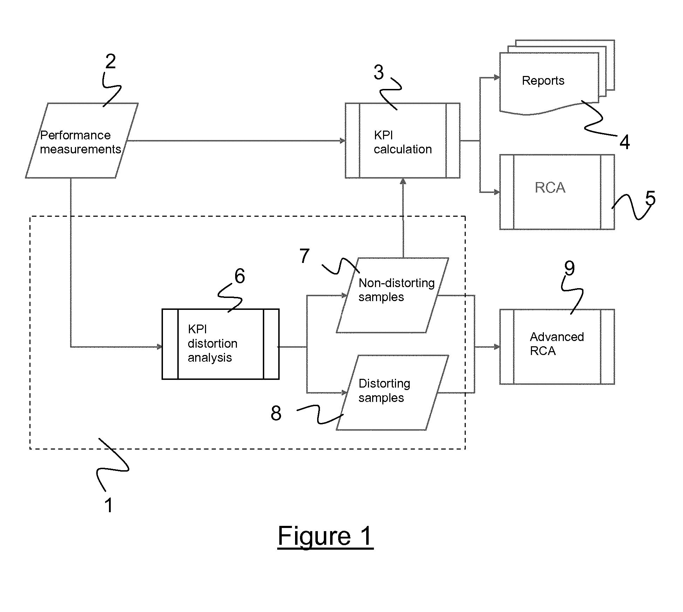

An example KPI distortion analysis process is illustrated schematically in Figure 1. The process steps added to the current KPI determination process are shown within the dashed lines 1. More particularly, Figure 1 illustrates the following known KPI calculation process steps:

- Performance measurement sampling (2)
  Performance measurement samples are generated throughout the mobile network management systems in various places and in various ways. Typically they are generated by network nodes in the form of logs, events, messages, etc. These samples can be thought of as records. A performance measurement sample (PMS) record always has a field which is an indication of performance and which serves as input for aggregation in a KPI. The PMS record has a further field that identifies the "object" to which the performance information belongs, e.g. IMSI, domain, etc. This may be referred to as the "source" of the sample. A PMR might include two or more fields that may alternatively, or in combination, identify the source of the record.
- KPI calculation (3)
  During KPI calculation a KPI value is calculated based on a set of measurement samples belonging to a given recording period (ROP). In the case of success/failure type performance measurement samples, the KPI value is a global success (or sometimes failure) rate and is computed as the ratio of successful (or sometimes unsuccessful) samples over the ROP to all the samples over the ROP. Examples for this type of KPI are 3G PS attach success rate, 3G PDP context activation success rate (success type), or 3G PS drop rate (a measure of the rate of some unsuccessful events as compared to the total).
- Reports (4)
  Reports are generated using the calculated KPIs. These may be used, for example, to determine payments between a network operator and a network manager.
- Root Cause Analysis (5)
  Root Cause Analysis (RCA) may be performed, using certain KPIs, in order to identify network faults giving rise, for example, to relatively low KPIs. For example, RCA may allow a network operator or manager to identify a fault network node or network link, or to identify a need for additional network capacity.

Considering now the new process steps intended to improve the KPI determination process, these include the following:

- KPI distortion analysis (6)
  This step involves a statistical analysis of the KPI sample set (PMS), separating the sample set into distorting and non-distorting sample sets. The separation is done by detecting suspicious sample sources. In one embodiment, identification of the distorting samples involves analysing each source (e.g. IMSI or UE type) in turn, calculating the KPI value firstly with the inclusion of the samples arising from this source and secondly without. A score is assigned to each source based on the difference between the two KPI values. Sources are marked as 'distorting' if the score is above a given threshold, i.e. if the KPI values differ significantly. Other conditions may optionally be defined to determine whether or not a source is a distorting source (see below).
- Non-distorting samples (7)
  Non-distorting samples are those samples that remain after the distorting samples have been removed. The non-distorting samples are passed to the conventional KPI calculation process (3) and serve as inputs for non-distorted KPI calculation.
- Distorting samples (8)
  Distorting samples are separated from the total KPI sample set and are treated in a special way. They are not counted as input samples for the non-distorted KPI calculation.
- Advanced RCA (9)

Advanced RCA is a process step whereby samples belonging to the identified sources of distortion can be (automatically or semi-automatically) analysed for possible immediate actions and remedy processes. During the advanced RCA the information within the distorting sample set can be exploited to great advantage. Advanced RCA may take as input the distorting samples, and compare the statistics to the rest of the (non-distorting samples). A feature selection algorithm can be applied at this stage to find which factor is the main differentiator between the distorting set and the rest. For example, the RCA may be employed to identify a certain terminal (UE) type that appears with a much larger frequency than in the non-distorting sample set, indicating a problem with this terminal type or with its settings.

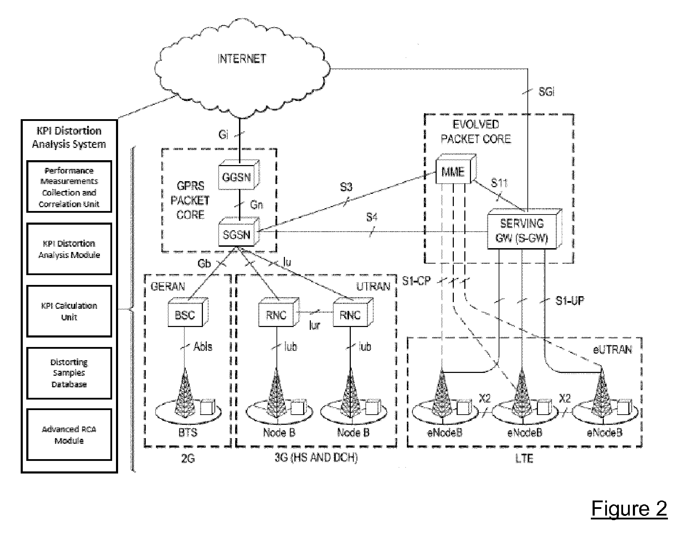

Figure 2 illustrates a KPI distortion analysis system in the context of a network comprising 2G, 3G, and LTE sub-networks. In the illustrated example, the KPI distortion analysis system is coupled, via the Internet, to a GGSN within the GPRS packet core and to a Serving gateway (S-GW) within the Evolved Packet Core. The system receives measurement samples from both of these nodes (and possibly from other GGSN and S-GW nodes within the same networks). Of course, the system may be similarly coupled to other nodes, including to nodes in the radio access networks.

To further illustrate the proposed improved KPI generation procedure, consider a scenario in which the performance measurement samples contain a boolean type performance indicator field (success/failure type, i.e., good and bad samples) and the aggregate KPI value is between 0 and 1. That is, the KPI provides a success to failure ratio. A KPI is generated for the sample set as a whole. This original KPI value is defined here as KPI_orig. Each source (e.g. IMSI) is considered in turn. For each source, a further KPI is calculated based on the sample set but with samples associated with that source removed. This KPI is defined as KPi_without.

Considering firstly the case where a given source has a negative impact on the KPI, i.e. KPI_orig < KPI_without, then the score is determined as:

$$Score = (KPI\_without - KPI\_orig) / (1 - KPI\_orig)$$

This score represents the ratio of failures, contributed by the source, to the total number of failures. If a given source has a positive impact on the KPI, i.e. KPI_orig > KPI_without, then the score is determined as:

$$Score = (KPI\_orig - KPI\_without) / KPI\_orig$$

In this case, the score represents the ratio of good samples (i.e. success) contributed by the source to the total number of good samples.

This score by itself may not be sufficient to determine with a necessary degree of certainty that a particular source is having a distorting effect on the KPI. A further condition may therefore be considered, namely, in the case of a negative distorting effect, whether or not the bad sample share of the sample set contributed by the source under consideration (BSS_source) is significantly greater that the bad sample share of the original sample set (i.e. BSS_orig = 1 - KPI_orig). For example, this condition may be met if:

$$BSS\_source >= 1.5*BSS\_orig$$

This can of course be expressed as:

$$KPI\_source <= 1.5*KPI\_orig - 0.5$$

where KPI_source is the good sample share of the sample set contributed by the source under consideration. In the case of a source having a positively distorting effect, the condition is:

$$KPI\_source >= 1.5*KPI\_orig$$

A source and the associated samples are marked as distorting if both the score discussed above exceeds some defined threshold and this condition is met.

Consider for example a source that contributes a very large number of samples to a sample set, 9000 from a total sample set of 10000 samples, and that KPI_orig=0.982, KPI_without=1, BSS_orig=0.018, and BSS_source=0.02. In this case, as KPI_orig < KPI_without, the Score = (1 - 0.982 ) / (1 - 0.982) = 1, suggesting that the source is having the maximum negative distorting impact on the KPI. However, it is not true that BSS_source >=1.5*BSS_orig, so this condition is not met. This source and the associated samples are not therefore marked as distorting.

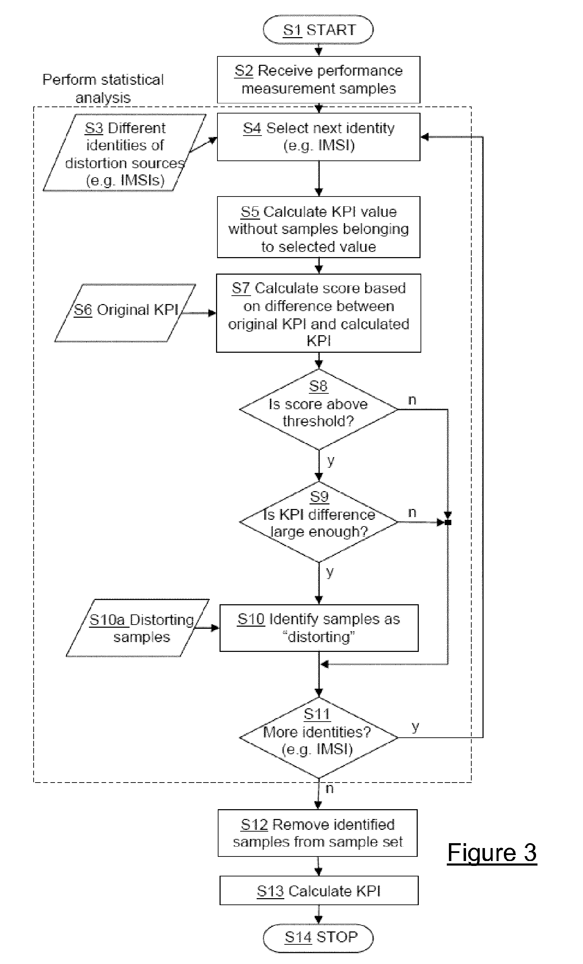

Turning now to the flow diagram of Figure 3, this shows a flow diagram illustrating a process for identifying distorting samples from a received sample set. The process starts at step S1, and at step S2 a set of performance measurement samples are received. A statistical analysis of this sample set is then performed (identified by the broken lines in Figure 3). Firstly, at step S3, different source identities are obtained. These identities are considered in turn at step S4. At step S5, the KPI (in question) is calculated, with samples associated with a particular identity under consideration being excluded. The original KPI, i.e. taking into account all samples, is provided at step S6. At step S7, a score is calculated based upon the difference between the original KPI (S6) and the KPI calculated at step S5. A determination is made at step S8 as to whether or not the score is above some predefined threshold. If the answer is yes, then at step S9 a further condition is considered, namely, is the KPI difference sufficiently large. If the answer is yes, at step S10 all samples associated with the identity in question are marked as distorting and are recorded (S10a). If the answer at step S9, the samples are not marked as distorting and the process continues to step S11 (see below). Similarly, if the answer at step S8 is no, the samples are not marked as distorting and the process continues to step S11. At step S11, a determination is made as to whether there are any further identities to consider. If yes, the process returns to step S4 where the next identity is selected. If there are no further identities to consider, the process continues to step S12. This step involves removing identified samples from the sample set, i.e. all samples associated with distorting sources. At step S3 a new KPI is calculated using only the undistorted sample set. The process stops at step S14. [NB. It will be appreciated that an alternative process might include identifying non-distorting sources, and removing samples associated with those sources to generate a non-distorting sample set for use in generating a new KPI.]

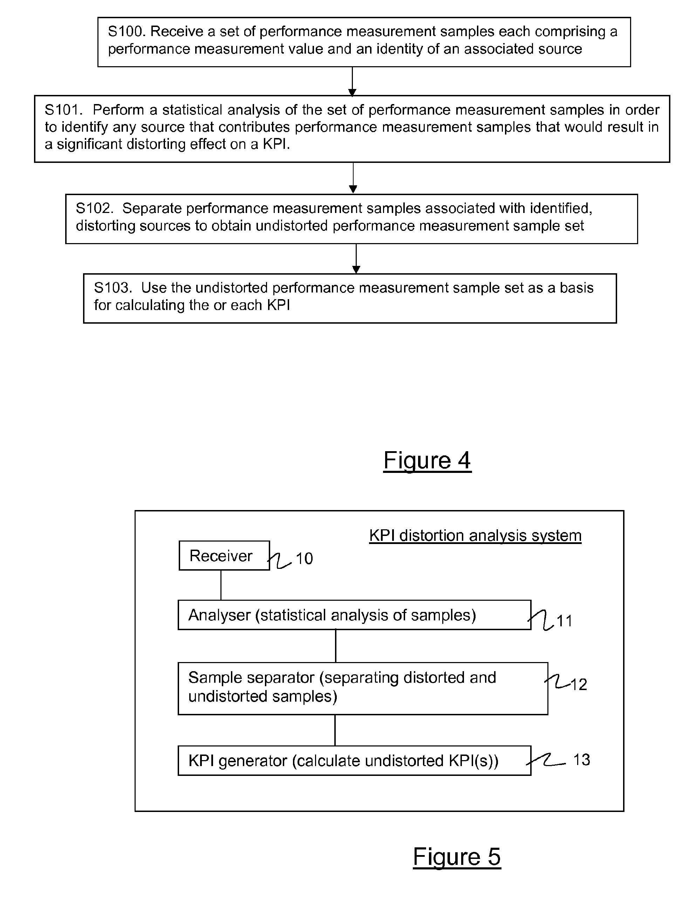

The process is illustrated more generally in the flow diagram of Figure 4. The method comprises a first step S100 of determining one or more Key Performance Indicators, KPIs, indicative of the performance of a communications network and calculated as an aggregation of performance measurement values in the communications network. A set of performance measurement samples are then received at step S101, each of which comprises a performance measurement value and an identity of an associated source. Step S102 comprises performing a statistical analysis of the set of performance measurement samples in order to identify any source that contributes performance measurement samples that would result in a significant distorting effect on a KPI. At step S102, performance measurement samples associated with the identified sources are separated from other samples to obtain an undistorted performance measurement sample set. A final step, S103, comprises using the undistorted performance measurement sample set as a basis for calculating the or each KPI.

A KPI distortion analysis system may be embodied as a single apparatus, i.e. node, or as apparatus distributed across a number of nodes. In either case, the apparatus will comprise hardware including processors, memory, data links, interfaces etc, implementing software code to perform the required functions. Figure 5 illustrates such an apparatus, where the hardware components are configured to implement:

A receiver 10 for receiving a set of performance measurement samples each of which comprises a performance measurement value and an identity of an associated source.
An analyser 11 for performing a statistical analysis of the set of performance measurement samples in order to identify any source that contributes performance measurement samples that would result in a significant distorting effect on a KPI.
A sample separator (12) for separating performance measurement samples associated with the identified sources from other samples to obtain an undistorted performance measurement sample set.
A KPI generator 14 for using the undistorted performance measurement sample set as a basis for calculating the or each KPI.

It will be appreciated by those of skill in the art that various modifications may be made to the above described embodiments without departing from the scope of the present invention.

**Claims**

1. A method of determining one or more Key Performance Indicators, KPIs, indicative of the performance of a communications network and calculated as an aggregation of performance measurement values in the communications network, the method comprising:

receiving (S100, S2) a set of performance measurement samples each of which comprises a performance measurement value and an identity of an associated source;

performing (S101, S3 to S11) a statistical analysis of the set of performance measurement samples in order to identify any source that contributes performance measurement samples that would result in a distorting effect on a KPI;

separating (S102, S12) performance measurement samples associated with the identified sources from other samples to obtain an undistorted performance measurement sample set; and

using (S103, S13) the undistorted performance measurement sample set as a basis for calculating the or each KPI.

2. A method according to claim 1, wherein each said source is a network subscriber and, for example, said source identity is an International Mobile Subscriber Identity (IMSI).

3. A method according to claim 1, wherein each said source is a subscriber type or subscriber terminal type.

4. A method according to any one of the preceding claims, wherein said step of performing (S101, S3 to S11) a statistical analysis of the performance measurement sample set comprises, for each source, determining (S4,S6) a KPI value with performance measurement samples associated with the source, KPI_orig, and a KPI value without performance measurement samples associated with the source, KPI_without, and determining (S7) a score for the source based upon the difference between these KPI values.

5. A method according to claim 4 and comprising determining said score by calculating a ratio of said difference to a function of KPI_orig.

6. A method according to claim 5 and comprising determining said score according to:

$$score = (KPI\_without - KPI\_orig) / (1 - KPI\_orig)$$

when the source has a negative impact on the KPI, and according to:

$$score = (KPI\_orig - KPI\_without) / KPI\_orig$$

when the source has a positive impact on the KPI.

7. A method according to any one of claims 4 to 6, wherein said step of performing a statistical analysis (S101, S3 to S11) comprises comparing (S8) the determined score to a threshold score and, in the case that the determined score exceeds the threshold score, taking that as an indication that the source has a distorting effect on the KPI.

8. A method according to any one of claim 4 to 7, wherein said step of performing a statistical analysis (S101, S3 to S11) comprises comparing (S9) KPI_orig with KPI_without and, if the difference is exceeds some threshold, taking that as an indication that the source has a distorting effect on the KPI.

9. A method according to claim 8 when appended to claim 7 and comprising identifying (S10) a source as being a distorting source if both indications are given for the source.

10. A method according to any one of the preceding claims, wherein said performance measurement value can have one of two states, success or failure.

11. A method according to any one of the preceding claims, wherein said set of performance measurement samples are samples collected over a recording period (ROP).

12. A method according to any one of the preceding claims, wherein said communications network is a Public Land Mobile Network, PLMN.

13. Apparatus for use in a communications network to determine one or more Key Performance Indicators, KPIs, indicative of the performance of a communications network and calculated as an aggregation of performance measurement values in the communications network, the apparatus comprising:

   a receiver (10) for receiving a set of performance measurement samples each of which comprises a performance measurement value and an identity of an associated source;
   an analyser (11) for performing a statistical analysis of the set of performance measurement samples in order to identify any source that contributes performance measurement samples that would result in a distorting effect on a KPI;
   a sample separator (12) for separating performance measurement samples associated with the identified sources from other samples to obtain an undistorted performance measurement sample set; and
   a KPI generator (13) for using the undistorted performance measurement sample set as a basis for calculating the or each KPI.

14. Apparatus according to claim 1, wherein said receiver is configured to receive said performance measurement samples from a Public Land Mobile Network, PLMN.

Figure 1

Figure 2

Figure 3

S100. Receive a set of performance measurement samples each comprising a performance measurement value and an identity of an associated source

S101. Perform a statistical analysis of the set of performance measurement samples in order to identify any source that contributes performance measurement samples that would result in a significant distorting effect on a KPI.

S102. Separate performance measurement samples associated with identified, distorting sources to obtain undistorted performance measurement sample set

S103. Use the undistorted performance measurement sample set as a basis for calculating the or each KPI

## Figure 4

KPI distortion analysis system

Receiver — 10

Analyser (statistical analysis of samples) — 11

Sample separator (separating distorted and undistorted samples) — 12

KPI generator (calculate undistorted KPI(s)) — 13

## Figure 5

Europäisches
Patentamt

European
Patent Office

Office européen
des brevets

# EUROPEAN SEARCH REPORT

Application Number

EP 13 15 4069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/019570 A1 (LEUNG YIU-MING [US] ET AL) 27 January 2011 (2011-01-27) | 1,13 | INV. H04L12/24 |
| Y | * paragraphs [0002], [0004], [0024], [0030] - [0049], [0054], [0055] * | 2-12,14 | |
| Y | US 2003/096606 A1 (INMAN DWIGHT [US] ET AL) 22 May 2003 (2003-05-22) * paragraphs [0004], [0009], [0024], [0025] - [0028], [0067] - [0068] * | 1-14 | |
| Y | US 6 721 557 B1 (RITTER RUDOLF [CH]) 13 April 2004 (2004-04-13) * column 1, line 1 - column 5, line 8 * | 1-14 | |
| A | WO 03/037019 A1 (NOKIA CORP [FI]; FLANAGAN ADRIAN [FI]; NOVOSAD TOMAS [FI]; LAIHO JAANA) 1 May 2003 (2003-05-01) * page 4, line 16 - page 5, line 7 * * page 6, line 9 - page 7, line 22 * * page 13, line 16 - page 14, line 15; claims * | 1-14 | |
| | | | TECHNICAL FIELDS SEARCHED (IPC) |
| A | WO 2011/045736 A1 (ERICSSON TELEFON AB L M [SE]; MAGYAR GABOR [HU]; VERES ANDRAS [HU]; KO) 21 April 2011 (2011-04-21) * page 3, line 12 - page 7, line 5; claims * * page 11, line 11 - page 16, line 8 * | 1-14 | H04L |
| A | WO 01/89141 A2 (ORCHESTREAM CANADA CORP [CA]) 22 November 2001 (2001-11-22) * the whole document * | 1-15 | |

-/--

The present search report has been drawn up for all claims

| Place of search | Date of completion of the search | Examiner |
|---|---|---|
| Munich | 10 June 2013 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 15 4069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SOLDANI D: "Means and Methods for Collecting and Analyzing QoE Measurements in Wireless Networks", WORLD OF WIRELESS, MOBILE AND MULTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA,IEEE, 26 June 2006 (2006-06-26), pages 531-535, XP010925913, DOI: 10.1109/WOWMOM.2006.61 ISBN: 978-0-7695-2593-8 * the whole document * ----- | 1-15 | |

TECHNICAL FIELDS
SEARCHED       (IPC)

The present search report has been drawn up for all claims

| Place of search | Date of completion of the search | Examiner |
|---|---|---|
| Munich | 10 June 2013 | Ceccarini, Giulio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 15 4069

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2013

| Patent document cited in search report | | Publication date | Patent family member(s) | | Publication date |
|---|---|---|---|---|---|
| US 2011019570 | A1 | 27-01-2011 | NONE | | |
| US 2003096606 | A1 | 22-05-2003 | AU | 2002366170 A1 | 10-06-2003 |
| | | | US | 2003096606 A1 | 22-05-2003 |
| | | | WO | 03045092 A1 | 30-05-2003 |
| US 6721557 | B1 | 13-04-2004 | AT | 216827 T | 15-05-2002 |
| | | | AU | 3244599 A | 11-10-1999 |
| | | | BR | 9908881 A | 21-11-2000 |
| | | | CN | 1293877 A | 02-05-2001 |
| | | | DE | 59901302 D1 | 29-05-2002 |
| | | | EP | 1064807 A1 | 03-01-2001 |
| | | | RU | 2222877 C2 | 27-01-2004 |
| | | | US | 6721557 B1 | 13-04-2004 |
| | | | WO | 9948316 A1 | 23-09-1999 |
| WO 03037019 | A1 | 01-05-2003 | CN | 1575614 A | 02-02-2005 |
| | | | WO | 03037018 A1 | 01-05-2003 |
| | | | WO | 03037019 A1 | 01-05-2003 |
| WO 2011045736 | A1 | 21-04-2011 | EP | 2489156 A1 | 22-08-2012 |
| | | | JP | 2013509016 A | 07-03-2013 |
| | | | US | 2012203788 A1 | 09-08-2012 |
| | | | WO | 2011045736 A1 | 21-04-2011 |
| WO 0189141 | A2 | 22-11-2001 | NONE | | |

EPO FORM P0459